# EUROPÄISCHE PATENTANMELDUNG

(11) **EP 0 615 020 A1**
(43) Veröffentlichungstag der Anmeldung: **14.09.1994**
(21) Anmeldenummer: 94810153.0
(22) Anmeldetag: 09.03.1994
(51) Int. Cl.: D21C 5/02, D21B 1/32

(54) **Verfahren zur Aufbereitung von Altpapier für die Papierherstellung**

(30) Priorität: 10.03.1993 CH 720/93
(71) Anmelder: PAPIERFABRIK UTZENSTORF AG, CH-3427 Utzenstorf (CH)
(72) Erfinder: Schmid, Harald, CH-3427 Utzenstorf (CH); Wankmüller, Sigfried, CH-1208 Genf (CH)
(74) Vertreter: Hug Interlizenz AG

(57) **Zusammenfassung**

Bei einem Verfahren zur Aufbereitung von Altpapier für die Papierherstellung unter Verwendung eines gemeinsamen Prozesswassers (PW), bei welchem Verfahren zunächst in einem ersten Teilprozess das Altpapier mittels eines ersten ProzesswasserTeilstroms (PW1) zu einer wässrigen Faserstoffsuspension aufgelöst und auf dem Altpapier vorhandene Druckfarbe durch Zugabe von Deinking-Chemikalien (DIC) zur Suspension abgelöst und als Druckfarbenpartikel dispergiert werden, und dann in einem zweiten Teilprozess die Suspension mittels eines zweiten Prozesswasser-Teilstroms (PW2) verdünnt und die Druckfarbenpartikel anschliessend mittels Flotation zumindest teilweise aus der Suspension entfernt werden, wird ein verbesserter Weissgrad beim Endprodukt auf kostengünstige und umweltschonende Weise dadurch erreicht, dass als Prozesswasser (PW) ein Wasser mit einer Wasserhärte von wenigstens 5°dH verwendet wird, und dass das Wasser des im ersten Teilprozess verwendeten ersten Prozesswasser-Teilstroms (PW1) durch eine Wasserbehandlung in seiner Wasserhärte (WH) deutlich heruntergesetzt wird.

## Beschreibung

### TECHNISCHES GEBIET

Die vorliegende Erfindung bezieht sich auf das Gebiet der Papierherstellung. Sie betrifft ein Verfahren zur Aufbereitung von Altpapierfürdie Papierherstellung unter Verwendung eines gemeinsamen Prozesswassers, bei welchem Verfahren
(a) in einem ersten Teilprozess das Altpapier mittels eines ersten Prozesswasser-Teilstroms zu einer wässrigen Faserstoffsuspension aufgelöst und auf dem Altpapier vorhandene Druckfarbe durch Zugabe von Deinking-Chemikalien zur Suspension abgelöst und als Druckfarbenpartikel dispergiert werden; und
(b) in einem zweiten Teilprozess die Suspension mittels eines zweiten Prozesswasser-Teilstroms verdünnt und die Druckfarbenpartikel anschliessend mittels Flotation zumindest teilweise aus der Suspension entfernt werden.

Ein solches Verfahren ist beispielsweise aus der Schweizerischen Patentschrift CH-A-547 914 bekannt.

### STAND DER TECHNIK

Bei der Herstellung von Papier unter Verwendung von Altpapier muss das in den Prozess eingebrachte Altpapier zunächst in geeigneter Weise aufbereitet werden, um eine möglichst gering verunreinigte Faserstoffsuspension für die Papiermaschine bereitzustellen. Neben dem Entfernen von groben und feinen mechanischen Verunreinigungen, d.h. ungelösten (physikalischen) Störstoffen, sowie echt bzw. kolloidal gelösten (chemischen) Störstoffen gilt bei der Aufbereitung die besondere Aufmerksamkeit der im Altpapier vorhandenen Druckfarbe und den mineralischen Bestandteilen (Füllstoffen). Nicht aus dem Prozess entfernte Druckfarbenreste sind massgeblich verantwortlich für einen geringen Weissgrad des Endproduktes und bestimmen damit dessen Qualität und Einsatzbereich.

Für die mehr oder weniger erfolgreiche Entfernung der Druckfarbe, aber auch anderer sichtbarer Schmutzpartikel, aus dem Prozess sind verschiedene Verfahren bekannt, die unter der englischen Bezeichnung "Deinking" zusammengefasst werden. Generell wird beim Deinking-Prozess zunächst die Druckfarbe unter Einsatz von Deinking-Chemikalien von den Papierfasern abgelöst und in der Faserstoffsuspension dispergiert. Dann werden die dispergierten Druckfarbenpartikel aus der Suspension so weit wie möglich oder ökonomisch vertretbar entfernt. Neben einem als Deinking-Waschverfahren bekannten Verfahren hat sich zur Entfernung der Druckfarbenpartikel aus der Suspension vor allem das Deinking-Flotationsverfahren bewährt.

Bei diesem Verfahren werden die Druckfarbenpartikel zu Aggregaten geeigneter Grösse zusammengefasst und durch Anlagerung an Luftblasen in einem sich an der Oberfläche der Suspension bildenden Schaum konzentriert und mit diesem Schaum mechanisch entfernt (Flotation). Die Aggregatbiidung wird beispielsweise durch Kalkseifenflocken vermittelt, die durch Einsatz entsprechender Chemikalien erzeugt oder direkt als Dispersion zugegeben werden und sich mit den Druckfarbenpartikeln zu Druckfarben-Seifen-Aggregaten zusammenschliessen.

Massgeblichen Einfluss auf die Wirksamkeit des Ablöse- und Austragungsprozesses hat die Härte des verwendeten Prozesswassers: So werden zum Deinking-Flotationsprozess beispielsweise Fettsäuren bzw. Fertigseifen eingesetzt. Die bei der Reaktion der Fettsäure mit der ebenfalls zur Druckfarbenablösung verwendeten Natronlauge entstehende Natriumseife dissoziiert im wässrigen Medium in Na⁺ und das Fettsäureanion, das als ionogenes Tensid oder grenzflächenaktive Substanz bezeichnet wird. Durch die anschliessende Reaktion von in dem üblichen hartem Wasser reichlich vorhandenen Ca²⁺⁻lonen mit dem ionogenen Tensid bildet sich schwerlösliche Kalkseife. Das Verhältnis zwischen gefällter Kalkseife und Tensid ist durch das Löslichkeitsprodukt der Kalkseife gegeben. Eine Veränderung der Ca²⁺⁻Konzentration, d.h., der Wasserhärte, hat somit auf den Grad dieser Fällungsreaktion einen direkten Einfluss.

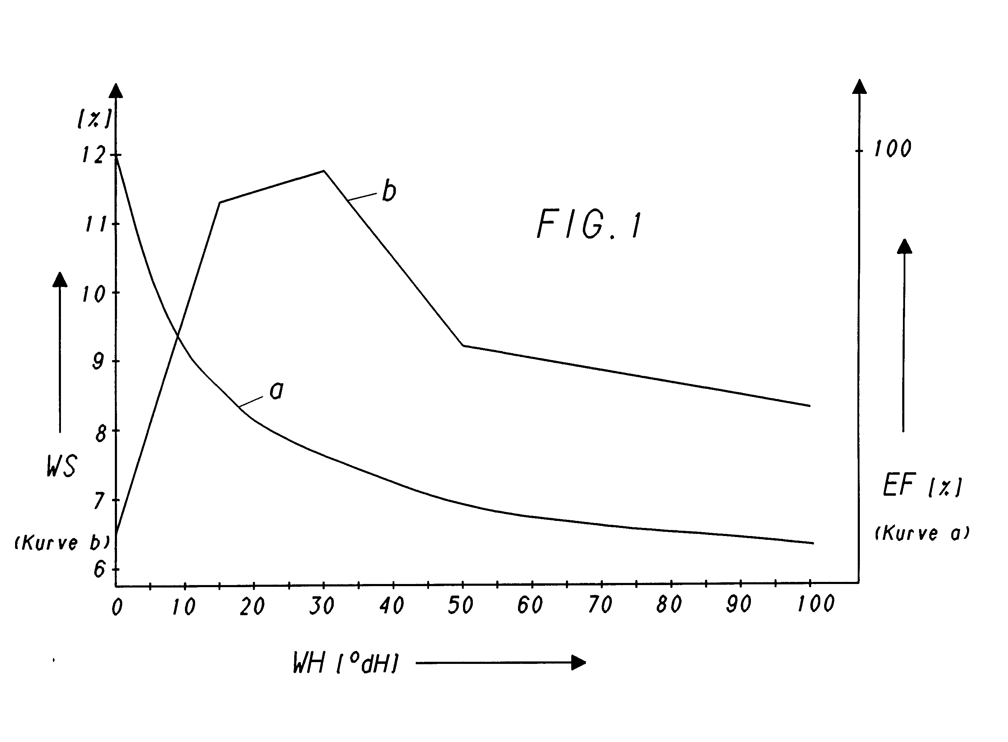

Der generelle Einfluss der Wasserhärte bzw. Ca²⁺⁻Konzentration des verwendeten Prozesswassers auf den Deinkingprozess insgesamt kann gemäss Fig. 1 anhand einer Kurve (b) der Weissgradsteigerung WS (in %) des Altpapierstoffes durch den Deinkingprozess in Abhängigkeit von der Wasserhärte WH (in Grad deutscher Härte, dH) des verwendeten Prozesswassers verdeutlicht werden. Die Weissgradsteigerung WS ist im Bereich sehr niedriger Wasserhärten sehr gering, nimmt mit steigender Wasserhärte bis zu einem Optimum zu und fällt bei höheren Wasserhärten wieder ab.

Zur Erklärung dieses Verhaltens müssen die beiden unterschiedlichen Prozessabläufe "Druckfarbenablösung" und "Druckfarbenaustrag durch Flotation" getrennt betrachtet werden:
Für die Druckfarbenablösung einerseits spielt die Herabsetzung der Oberflächenspannung des Wassers durch die gelöste Seife unter die Oberflächenspannung der trockenen Druckfarbe eine erhebliche Rolle. Für die erzielbare Benetzbarkeit der Druckfarbe durch das Wasser, die zu einer Lockerung der Bindung zwischen Fasern und Druckfarbe führt, ist die Konzentration des in der Suspension vorliegenden Tensids ausschlaggebend.

Infolge der hohen Assoziationsenergie zwischen den hydrophoben Druckfarbenpartikeln einerseits und den hydrophoben Enden des Tensids andererseits kommt es zu dessen Anlagerung in der Weise, dass die hydrophilen Gruppen des Tensids in die wässrige Phase zeigen. Durch diese Adsorption des Tensids auf den Druckfarbenpartikeln findet eine Erhöhung der negativen Oberflächenladung und somit eine Reduzierung der Hydrophobie der Druckfarbenpartikel statt. Neben der durch das Auflöseaggregat eingebrachten mechanischen Energie sind diese grenzflächenchemischen Vorgänge für die Ablösung der Druckfarbenpartikel von den Fasern einerseits und deren anschliessende Dispergierung in der Faserstoffsuspension andererseits ausschlaggebend. Durch die dispergierende Wirkung wird weiterhin verhindert, dass die Druckfarbe wieder auf die Faser aufziehen kann.

Die ablösende und dispergierende Wirkung des Tensids während des Auflöseprozesses wird mit steigender Härte des Prozesswassers geringer (siehe Fig. 1: Kurve a der Ablöse- und Dispergiereffektivität EF in % in Abhängigkeit von der Wasserhärte WH). Eine Erhöhung der Ca²⁺⁻Konzentration bewirkt hierbei eine Verschiebung des chemischen Gleichgewichts zugunsten der Bildung von Kalkseife, wodurch die Konzentration des Tensids sinkt und die Ablöseeffizienz aufgrund steigender Oberflächenspannung des Wassers verringert wird.

Um andererseits beim Druckfarbenaustrag eine wirkungsvolle Flotation zu erzielen, ist es notwendig, das die Natriumseife mit den Ca²⁺⁻lonen eine Kalkseifenflocke bildet und unter Ausbildung eines hydrophoben Druckfarben-Seifenpartikel-Aggregates eine Sammlung der Druckfarbenpartikel in einem bestimmten Grössenspektrum herbeiführt.

Unterschreitet die vorhandene Ca²⁺⁻Konzentration der Faserstoffsuspension vor der Flotation einen bestimmten Wert (d.h. bei Wasserhärten kleiner 10 dH), so liegt aufgrund des chemischen Gleichgewichtes das Tensid in zu hoher Konzentration vor, so dass eine übermässige negative Oberflächenladung der Druckfarbenpartikel und damit die Dispergierung der Druckfarben-Kalkseifen-Aggregate zum Teil erhalten bleibt. Darüber hinaus erfolgt bei zu geringer Wasserhärte die Flockung nur in ungenügendem Masse, wodurch die Sammlerwirkung der Kalkseifenflocken erheblich beeinträchtigt und der Optimalbereich der für die Flotation wichtigen Partikelgrösse nicht erreicht wird. Sowohl die zu geringe erreichte Partikelgrösse, als auch die zu geringe, jedoch für den Flotationseffekt entscheidende Hydrophobie der Druckfarbenpartikel, führen in diesem Fall unweigerlich zu einer Verschlechterung des Flotationswirkungsgrades und somit zu einer Verminderung des Deinkingergebnisses bzw. des Weissgrades.

Bei Ueberschreitung einer gewissen Ca²⁺⁻Konzentration (ab ca. 30 dH) wirkt neben dem Effekt der Redeposition von Druckfarben-Seifen-Aggregaten und Füllstoffpartikeln auf die Fasern, durch welche deren Flotation unmöglich wird, auch der Effekt einer verstärkten Grössenzunahme der Druckfarben-Seifen-Partikel. So bilden sich mit zunehmender Ca²⁺⁻Konzentration, analog zu anderen Flockungsvorgängen, grössere Aggregate, deren Flotierbarkeit zunehmend schwieriger und ab einer gewissen oberen Grenzgrösse sogar unmöglich wird.

Aus den vorangegangenen Ausführungen wird ersichtlich, dass die beiden Teilprozesse "Druckfarbenablösung und -dispergierung" sowie "Druckfarbenflotation" hinsichtlich der optimalen Wasserhärte einander widersprechende Anforderungen an dass Prozesswasser stellen: Während die Druckfarbe bei geringen Wasserhärten am wirksamsten abgelöst wird, ist zu deren Flotation eine gewisse Ca²⁺⁻Konzentration nötig. Da bei den herkömmlichen Aufbereitungsverfahren - auch bei denen, die gemäss der Lehre der eingangs genannten Druckschrift CH-A-547 914 mit getrennten Teilkreisiäufen für Auflösungs- und Flotationsphase arbeiten- jedoch das Prozesswasser der Altpapieraufbereitungsanlage sowohl zur Auflösung als auch zur Verdünnung vor der Flotation verwendet wird und mit einer bestimmten Wasserhärte vorliegt, ergibt sich die erwähnte Kurve b der Weissgradsteigerung WS aus Fig. 1. Die Wasserhärte muss demnach nach Art eines Kompromisses auf einen Mittelwert eingestellt werden oder mit diesem Mittelwert vorliegen, um einen brauchbaren Weissgrad zu erreichen, ohne dass allerdings die beiden Teilprozesse optimal ablaufen können.

### DARSTELLUNG DER ERFINDUNG

Es ist daher Aufgabe der Erfindung, ein Verfahren zur Aufbereitung von Altpapier zu schaffen, welches durch eine veränderte Führung der Teilprozesse beim Flotations-Deinking einen deutlich verbesserten Weissgrad des Endprodukts erreicht und zugleich kostengünstig und umweltschonend arbeitet.

Die Aufgabe wird bei einem Verfahren der eingangs genannten Art dadurch gelöst, dass
(c) als Prozesswasser ein Wasser mit einer Wasserhärte von wenigstens 5 dH verwendet wird; und
(d) das Wasser des im ersten Teilprozess verwendeten ersten Prozesswasser-Teilstroms durch eine Wasserbehandlung in seiner Wasserhärte deutlich heruntergesetzt wird.

Der Kern der Erfindung besteht darin, ausgehend von einem üblicherweise mit höheren Härtegraden vorliegenden Prozesswasser das Wasser für den ersten Teilprozess in seiner Wasserhärte durch eine substantielle Enthärtung an die Erfordernisse des ersten Teil prozesses besser anzupassen, während das Wasser für den zweiten Teilprozess in seiner Härte dem Prozesswasser gleichen oder gegenüber dem Prozesswasser sogar noch erhöht werden kann. Hierdurch lassen sich die beiden Teilprozesse in ihrer Wirksamkeit getrennt voneinander so steigern, dass sich der erzielte Weissgrad insgesamt deutlich verbessert.

Eine erste bevorzugte Ausführungsform des erfindungsgemässen Verfahrens ist dadurch gekennzeichnet, dass zur Herabsetzung der Wasserhärte dem Wasser des ersten Prozesswasser-Teilstroms eine wasserenthärtende Chemikalie zugesetzt wird, und dass als wasserenthärtende Chemikalie Na₂C0₃ verwendet wird. Hierdurch wird eine besonders einfache, preiswerte und ökologisch unbedenkliche Enthärtung erreicht. Darüber hinaus entfällt die Notwendigkeit eines Einsatzes von NaOH.

Eine zweite bevorzugte Ausführungsform zeichnet sich dadurch aus, dass in einem Zwischenschritt zwischen dem ersten und zweiten Teilprozess der Suspension durch Eindicken Prozesswasser in Form eines Filtrats (AW) entzogen wird, dass das beim Zwischenschritt durch Eindicken erhaltene Filtrat dem ersten Prozesswasser-Teilstrom wieder zugeführt wird, dass das Filtrat einer Aufbereitung unterzogen wird, bevor es dem ersten Prozesswasser-Teilstrom wieder zugeführt wird, und dass diese Aufbereitung eine selektive Flotation umfasst, welche unter Vermeidung von Flotationschemikalien ausschliesslich mittels Injektion eines sauerstoffhaltigen Gases durchgeführt wird. Hierdurch wird ein wasser- und chemikaliensparender Teilkreislauf für den ersten Teilprozess realisiert, der einen zusätzlichen, chemisch neutralen Austrag von Druckfarbenpartikeln bereits in der Auflösephase bewirkt und damit den Weissgrad des Endprodukts weiter steigert.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit den Figuren näher erläutert werden. Es zeigen
Fig. 1 in einem Diagramm die Abhängigkeit der Ablöse- und Dispergier-Effektivität (Kurve a) und des Druckfarbenaustrags (gekennzeichnet durch die Weissgradsteigerung (Kurve b)) von der Wasserhärte WH;
Fig. 2 in einem schematischen Ablaufdiagramm ein bevorzugtes Ausführungsbeispiel für ein Verfahren nach der Erfindung mit chemischer Wasserenthärtung im ersten Teilprozess;
Fig. 3 ein zu Fig. 2 entsprechendes Diagramm eines in der Praxis erprobten vollständigen Prozesses zur Altpapieraufbereitung; und
Fig. 4 einen zu Fig. 3 analogen Prozess mit zusätzlicher Rückführung und Reinigung des Wassers im ersten Teilprozess.

### WEGE ZUR AUSFÜHRUNG DER ERFINDUNG

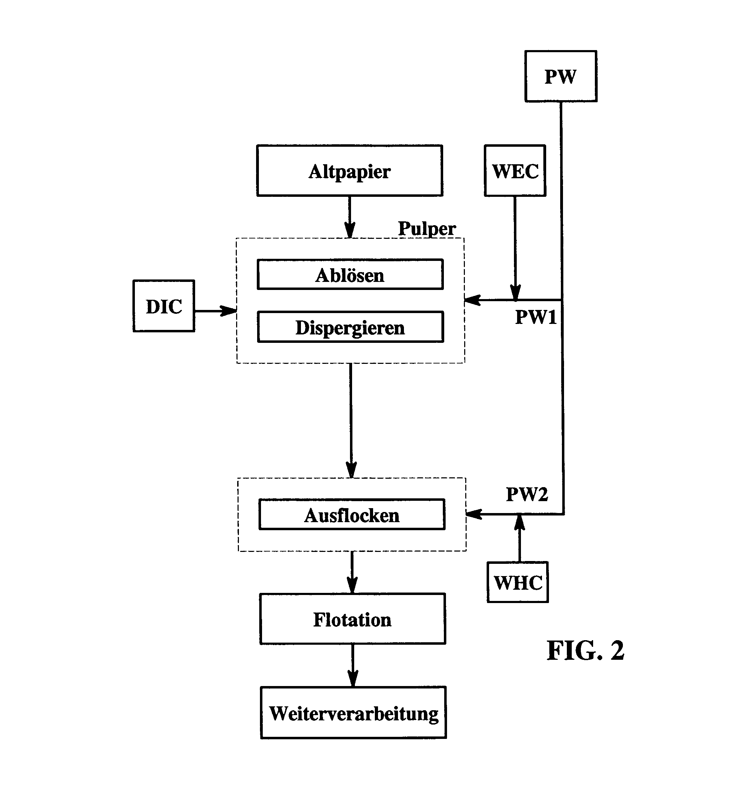

In Fig. 2 ist in einem schematisierten Ablaufdiagramm ein erstes bevorzugtes Ausführungsbeispiel eines Verfahrens nach der Erfindung dargestellt. Das Deinking-Verfahren zerfällt im wesentlichen in zwei hintereinander ablaufende Teilprozesse. Im ersten Teilprozess wird in einem Pulper das anfallende Aitpapier mit Wasser aus einem ersten Prozesswasser-Teilstrom PW1, der von einem gemeinsamen Prozesswasser PW abgezweigt wird, zu einer wässrigen Faserstoffsuspension aufgelöst. Als Prozesswasser PW wird dabei ein üblicherweise zur Verfügung stehendes Wasser verwendet, welches eine für die optimale Druckfarbenablösung zu hohe Wasserhärte, nämlich mindestens 5_{'}dH aufweist.

Durch mechanische Einwirkung im Pulper und durch die zugesetzten üblichen Deinking-Chemikalien DIC (z.B. Natronlauge, Wasserglas, Wasserstoffperoxid, Dispergiermittel, Fettsäure und dgl.) wird die auf den Fasern des Altpapiers haftende Druckfarbe in Partikelform abgelöst und in der Suspension dispergiert. Um die Ablösung und Dispergierung möglichst wirkungsvoll zu gestalten, wird der Suspension im Pulper über den ersten Prozesswasser-Teilstrom PW1 eine wasserenthärtende Chemikalie WEC zugesetzt, welche die ursprüngliche Wasserhärte des Prozesswassers PW deutlich herabsetzt. Bevorzugt wird hier Na₂C0₃ eingesetzt, weil dadurch der Einsatz von NaOH entfällt.

Bei der Verwendung von sehr weichem Wasser im Pulper liegt die zugegebene Fettsäure nach der Reaktion mit der NaOH vorwiegend als Fettsäureanion vor, da eine nur geringe Fällungsreaktion zur Kalkseife stattfinden kann. Diese grosse Menge an grenzflächenaktiver Substanz bewirkt eine starke Absenkung der Oberflächenspannung und eine sehr gute Druckfarbenbenetzung. Die Druckfarbenablösung wird hierdurch wesentlich stärker unterstützt als bei der Verwendung von hartem Wasser, bei welchem die Konzentration der Fettsäureanionen aufgrund der Fällungsreaktion zur Kalkseife wesentlich geringer ist. Der zweite Effekt, der einen höheren Weissgrad bewirkt, ist der, dass durch eine geringere Ca²⁺⁻Konzentration die gebildeten Kalkseifenflocken wesentlich kleinere Grössen aufweisen, und dadurch eine feinere Verteilung, und damit ein höherer Adsorptionsgrad der Flotationschemikalie auf den Druckfarbenpartikeln entsteht.

Nachdem die Druckfarbe in der Suspension weitgehend von den Papierfasern abgelöst und dispergiert worden ist, schliesst sich grundsätzlich ein zweiter Teilprozess an, bei dem die Faserstoffsuspension durch Zugabe von Wasser eines zweiten Prozesswasser-Teilstroms PW2 weiter verdünnt wird. Der zweite Prozesswasser-Teilstrom PW2 ist gleichfalls vom gemeinsamen Prozesswasser PW abgezweigt, besitzt aber entweder dessen ursprüngliche Wasserhärte oder wird sogar - z.B. durch gezielte Zugabe einer wasserhärtenden Chemikalie WHC, insbesondere von CaCl₂- noch härter gemacht. Die Zugabe des harten Wassers aus dem zweiten Prozesswasser-Teilstrom PW2 führt zu einer selektiven Ausflockung der Druckfarbenpartikel, d.h., das ionogene Tensid, welches im ersten Teilprozess auf der Druckfarbe adsorbiert wurde, wird geflockt, wodurch, abhängig von der jeweiligen Ca²⁺-Konzentration, nun eine Sammlung unter Ausbildung eines bestimmten, für die Flotation optimalen Partikelgrössenspektrums stattfindet. Die ausgeflockten Druckfarben-Seifen-Aggregrate werden dann anschliessend mittels Flotation aus der Suspension ausgetragen. Die am Ausgang der Flotationsstufe zur Verfügung stehende Faserstoffsuspension kann dann weiterverarbeitet werden.

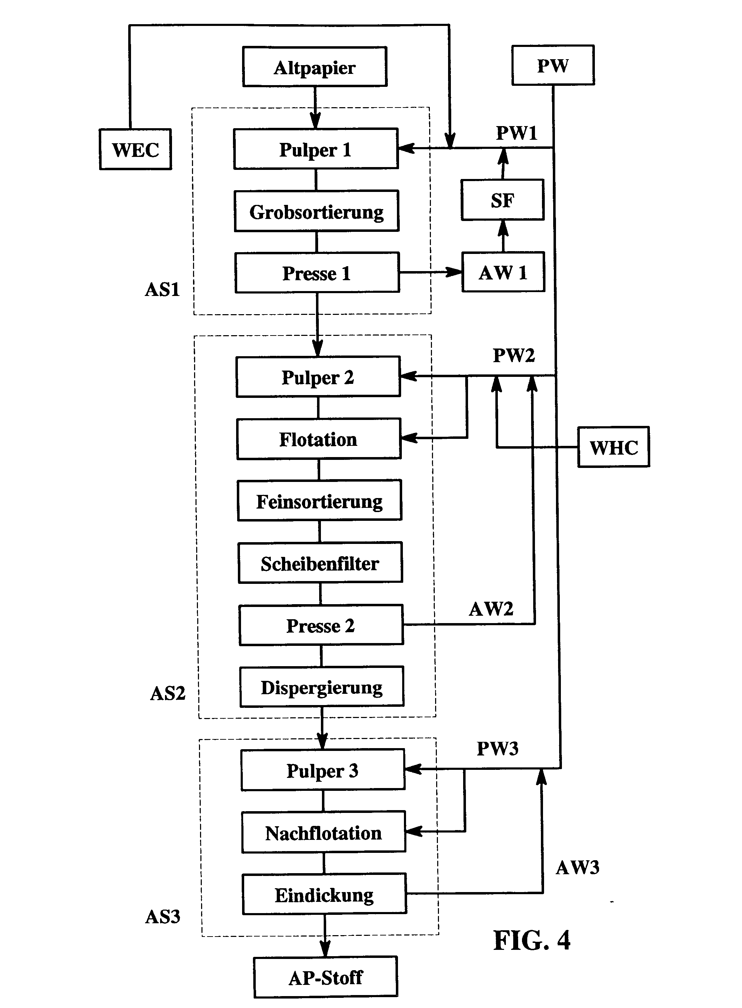

Anstelle des direkten Uebergangs vom ersten zum zweiten Teilprozess kann im übrigen der Suspension auch in einem Zwischenschritt durch Eindicken Prozesswasser entzogen werden (siehe dazu die Presse 1 in Fig. 4), welches als erstes Filtrat (AW1) in einem ersten Prozesswasserkreislaufvollständig oder teilweise weiterverwendet werden kann. Das Eindicken kann in an sich bekannter Weise durch den Einsatz verschiedener Arten von Pressen erfolgen, weshalb darauf an dieser Stelle nicht weiter eingegangen werden soll.

Während beim herkömmlichen Verfahren wegen der von Anfang an vorhandenen Wasserhärte die Bildung von grossen Kalkseifenflocken bereits im Pulper stattfindet und damit die anschliessende beschriebene Sammlung der Partikel in wenig effizienter Weise durch die gebildete Seife herbeigeführt werden muss, geht beim erfindungsgemässen Verfahren in vorteilhafter Weise die Adsorption des Tensids auf der Druckfarbe der Flockenbildung voraus, so dass bei der Bildung grösserer Flocken die Druckfarbenpartikel bereits an der Seife gebunden sind.

Es wurde bereits erwähnt, dass die Enthärtung des Wassers im ersten Teilprozess bevorzugt durch Zugabe einer speziellen wasserenthärtenden Chemikalie WEC bewirkt wird. Grundsätzlich wäre es im Rahmen der Erfindung aber auch denkbar, das Wasser mittels lonentauschern zu enthärten oder die Ca²⁺-lonen durch Einsatz von Komplexbildnern zu komplexieren. Derartige Verfahren sind jedoch wegen der in der Praxis benötigten grossen Wassermengen nicht wirtschaftlich und verfahrenstechnisch ungünstig. Aus diesem Grund wird vorzugsweise eine Chemikalie eingesetzt, die billig und leicht anwendbar und vor allem ökologisch unbedenklich ist. Eine solche Chemikalie ist insbesondere Na₂C0₃.

Der erste Prozesswasser-Teilstrom PW1 des Prozesswassers PW, dessen Wasserhärte je nach Fahrweise der Papiermaschine oberhalb 5dH, insbesondere zwischen 15·dH und 100·dH, liegt und der zur Auflösung des Altpapiers im ersten Pulper 1 herangezogen wird, wird also vorzugsweise mit Na₂C0₃ versetzt. Aufgrund der geringen Löslichkeit von CaC0₃ von etwa 7 mg/I (das entspricht einer Wasserhärte von 0,5dH) findet eine Fällungsreaktion zwischen den im Ueberschuss vorliegenden CO₃^{2―}-lonen und den im Wasser vorhandenen Ca²⁺⁻lonen nach der folgenden Gleichung statt:
_{Ca2}+ ₊ CO₃^{2―} G⇔ CaCO_{3(fest)}

Der Grad der Fällungsreaktion bzw. das chemische Gleichgewicht dieser Reaktion ist durch das Löslichkeitsprodukt von CaC0₃ definiert:
L = c[Ca²⁺] x c[CO₃^{2―}] = 4,8 x 10-⁹ mol/l.

Die einzusetzende Menge an Na₂CO₃ ist abhängig von der jeweiligen Prozesswasserhärte, liegt jedoch bei maximal 4 Gew.-% bezogen auf die Masse des eingetragenen Papiers.

Die Auswirkungen (und Vorteile) des Na₂C0₃-Einsatzes beim Prozess der Altpapieraufbereitung können wie folgt zusammengefasst werden:
(1) Durch Zugabe von Na₂CO₃ kann die für das Deinking übliche Natronlauge substituiert werden, da Na₂CO₃ ein basisch wirkendes Salz ist.
(2) Die Wasserhärte wird während der Auflösung des Altpapiers reduziert, wodurch sich eine wesentlich höhere Wirksamkeit der grenzflächenaktiven Substanz (Natriumseife) ergibt.
(3) Durch die konzentrationsbedingte höhere Wirksamkeit der druckfarbenablösenden Chemikalie reduziert sich der notwendige pH-Wert während der Auflösephase.
(4) Die Druckfarben-Kalkseifen-Aggregate bilden sich selektiv aus.
(5) Durch die selektive Ausbildung der Druckfarben-Kalkseifen-Aggregate und die besondere Steuerung des Flockungsvorganges ist es möglich, eine verbesserte Flotation von wasserbasierenden Flexodruckfarben zu bewirken.

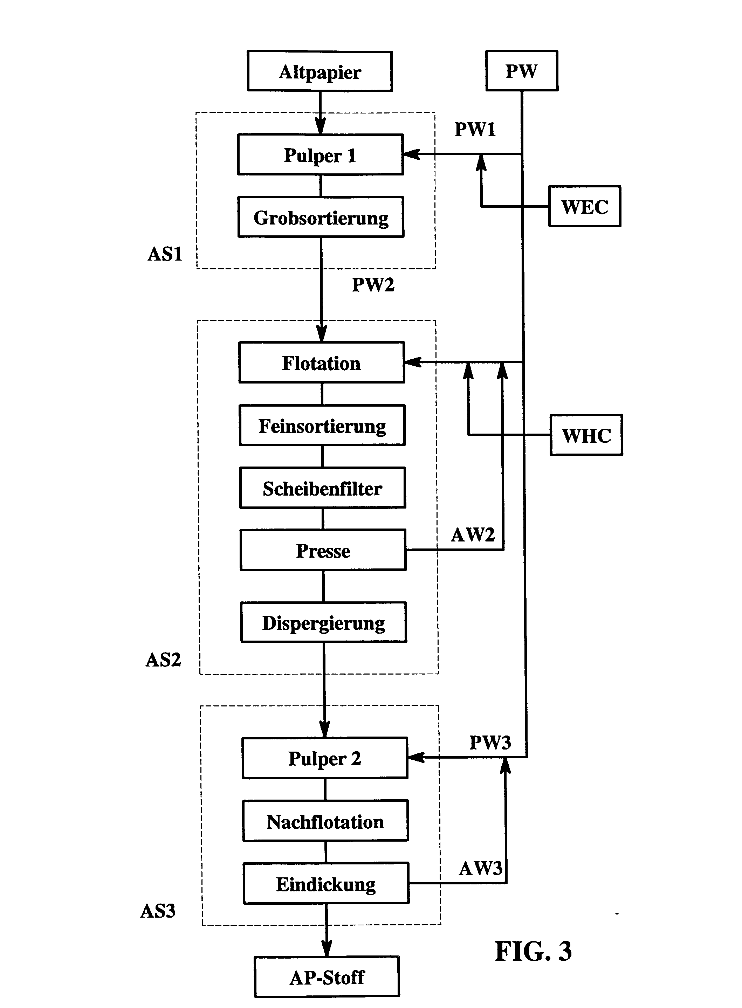

Während in Fig. 2 nur der prinzipielle Ablauf eines Verfahrens nach der Erfindung dargestellt ist, zeigt Fig. 3 einen vollständigen Ablauf, wie er sich in der Praxis bewährt hat. Die Zugabe der üblichen Deinking-Chemikalien ist in dieser Darstellung der Uebersichtlichkeit halber weggelassen worden. Das Aufbereitungsverfahren nach Fig. 3 unterteilt sich in drei Aufbereitungsstufen AS1, AS2 und AS3, die jeweils mit einem eigenen Prozesswasser-Teilstrom PW1, PW2 und PW3 aus dem gemeinsamen Prozesswasser PW versorgt werden und z.T. ein eigenes FiltratAW2 und AW3 abgeben, das dem jeweiligen Prozesswasser-Teilstrom PW2 bzw. PW3 erneut zugeführt wird.

In der ersten Aufbereitungsstufe AS1 wird das Altpapier in einem ersten Pulper 1 in dem durch Zugabe von wasserenthärtenden Chemikalien WEC weich gemachten Wasser aufgelöst, so dass eine wässrige Faserstoffsuspension mit einer Stoffdichte von z.B. 4% entsteht. Die Suspension wird in einer Grobsortierungsstufe von artfremden, groben Verunreinigungen wie Büroklammern, Plastikstreifen oder dgl. befreit.

Die eingedickte Suspension wird dann in einer zweiten Aufbereitungsstufe AS2 mittels eines zweiten Prozesswasser-Teilstroms PW2 mit nicht-enthärteten Wasser auf eine Stoffdichte von etwa 1 % verdünnt, wobei das Ausflocken der Druckfarben-Kalkseifen-Aggregate durch die vorhandenen Ca²⁺⁻lonen begünstigt wird. Bei nicht ausreichender Wasser härte (z.B. 10dH) kann mit einer wasserhärtenden ChemikaiieWHC, CaC1₂, nachgeholfen werden. Die Suspension wird anschliessend durch eine erste Flotation teilweise von der Druckfarbe befreit und durch Feinsortierung (z.B. durch Cleaner, Drucksortierer etc.) weiter von unerwünschten Fremdstoffen gereinigt. Am Ende der zweiten Aufbereitungsstufe AS2 wird die Suspension dann wiederum in einer Presse auf eine Stoffdichte von etwa 30% eingedickt.

In einer weiteren, dritten Aufbereitungsstufe AS3 schliesslich wird die Suspension noch einmal mittels eines dritten Prozesswasser-Teilstroms PW3 verdünnt, einer Nachflotation unterworfen und wiederum eingedickt (Filtrat AW3). Am Schluss steht ein gereinigter, aufgehellter Altpapier(AP)-Stoff mit einer Stoffdichte bis zu 15% zur Verfügung, der in die Stoffaufbereitung einer nachfolgenden Papiermaschine gegeben werden kann. Es versteht sich dabei von selbst, dass die in Fig. 3 gezeigten Abläufe in an sich bekannter Weise durch weitere Stufen ergänzt, abgeändert oder in der Reihenfolge der Schritte umgestellt werden können. Wesentlich ist, dass bei Verwendung eines relativ harten gemeinsamen Prozesswassers PW das Wasserfürdie erste Aufbereitungsstufe AS1 (Prozesswasser-Teilstrom PW1) durch die Zugabe der wasserenthärtenden Chemikalie WEC weich gemacht und damit für den Auflöse- und Dispergierungsvorgang der Druckfarbe in seinen Eigenschaften optimiert wird.

Findet - wie in Fig. 4 dargestellt - eine Eindickung nach dem Auflöseprozess mit Hilfe eines Eindickaggregats statt, so kann das nach dem Auflösen des Altpapiers durch das erste Eindicken erhaltene erste Filtrat AW1, das wegen der Enthärtung ein weiches Wasser ist, mit Vorteil in diesem Teilprozess wiederverwendet werden, wenn es zurückgeführt und dem ersten Prozesswasser-Teilstrom PW1 wieder zugegeben wird. Durch einen solchen geschlossenen Wasserkreislauf, wie er in Fig. 4 dargestellt ist, werden dann sowohl der Wasserals auch der Chemikalienverbrauch, insbesondere des Na₂C0₃, reduziert, was zu einer in ökonomischer und ökologischer Hinsicht verbesserten Produktionsweise führt.

In dem geschlossenen Wasserkreislauf des ersten Teilprozesses zirkulieren sowohl suspendierte Fasern als auch Druckfarbenpartikel und andere Störstoffe, die sich durch die Zirkulation anreichern. Im Hinblick auf den erreichbaren Weissgrad des Papiers ist es von Vorteil, eine solche Anreicherung der Störstoffe möglichst zu vermeiden und die Störstoffe darüber hinaus möglichst frühzeitig aus dem Herstellungsprozess zu entfernen. Andererseits ist es wünschenswert, das zirkulierende Fasermaterial im Kreislauf zu belassen, da es den für die spätere Papierherstellung notwendigen Grundstoff darstellt. Beide Anforderungen können erfüllt werden, wenn vor der Rückspeisung in den ersten Prozesswasser-Teilstrom PW1 das erste Filtrat AW1 einerspeziellen Aufbereitung unterzogen wird, die eine selektive Flotation SF umfasst, welche unter Vermeidung von Flotationschemikalien ausschliesslich mittels Injektion eines sauerstoffhaltigen Gases, insbesondere Luft, durchgeführt wird (Fig. 4).

Bei dieser Art der selektiven Flotation wird auf die Zugabe von Flockungschemikalien und dgl. verzichtet. Die Flotation wird allein dadurch erreicht, dass Gasblasen optimaler Grösse (im Durchmesserbereich von etwa 0,5-1 mm) erzeugt werden, an welche sich die zu entfernenden Störstoffpartikel anlagern und im entstehenden Schaum ausgetragen werden können. Die Einstellung deroptimalen Blasengrösse kann dabei mit bekannten Methoden vorgenommen werden, wie sie z.B. in der CH-A-665 962 beschrieben sind. Diese "chemielose" Flotation führt zu einer Reinigung des umlaufenden Prozesswassers, ohne jedoch den Chemikalienhaushalt in dem Teilprozess zu stören und die Wasserhärte nachteilig zu verändern. Darüber hinaus verhindert die Injektion von Sauerstoff das Auftreten anaerober Vorgänge im geschlossenen Kreislauf, die zu einer Verschlechterung des Prozesswassers und damit auch der Qualität des Endprodukts führen.

Insgesamt ergibt sich mit der Erfindung ein Verfahren zur Altpapieraufbereitung, welches einfach anzuwenden ist, kostengünstig und umweltverträglich durchgeführt werden kann und ein Papier mit einem wesentlich verbesserten Weissgrad ergibt.

### BEZEICHNUNGSLISTE

AS1,..,AS3 Aufbereitungsstufe
AW Filtrat
AW1,..,AW3 Filtrat
DIC Deinking-Chemikalie
EF Ablöse- und Dispergier-Effektivität
PW Prozesswasser
PW1,..,PW3 Prozesswasser-Teilstrom
SF Selektive Flotation
WEC wasserenthärtende Chemikalie
WH Wasserhärte
WHC wasserhärtende Chemikalie (z.B. CaC1₂)
WS Weissgradsteigerung

## Patentansprüche

1. Verfahren zurAufbereitung von Altpapier für die Papierherstellung unter Verwendung eines gemeinsamen Prozesswassers (PW), bei welchem Verfahren
(a) in einem ersten Teilprozess das Altpapier mittels eines ersten Prozesswasser-Teilstroms (PW1) zu einer wässrigen Faserstoffsuspension aufgelöst und auf dem Altpapier vorhandene Druckfarbe durch Zugabe von Deinking-Chemikalien (DIC) zur Suspension abgelöst und als Druckfarbenpartikel dispergiert werden; und
(b) in einem zweiten Teilprozess die Suspension mittels eines zweiten Prozesswasser-Teilstroms (PW2) verdünnt und die Druckfarbenpartikel anschliessend mittels Flotation zumindest teilweise aus der Suspension entfernt werden;
dadurch gekennzeichnet, dass
(c) als Prozesswasser (PW) ein Wasser mit einer Wasserhärte von wenigstens 5 dH verwendet wird; und
(d) das Wasser des im ersten Teilprozess verwendeten ersten Prozesswasser-Teilstroms (PW1) durch eine Wasserbehandlung in seiner Wasserhärte (WH) deutlich heruntergesetzt wird.

2. Verfahren nach Anspruch 1, dadurch gekennzeichnet, dass als Prozesswasser (PW) ein Wasser mit einer Wasserhärte zwischen 15·dH und 100·dH verwendet wird.

3. Verfahren nach Anspruch 2, dadurch gekennzeichnet, dass zur Herabsetzung der Wasserhärte (WH) dem Wasser des ersten Prozesswasser-Teilstroms (PW1) eine wasserenthärtende Chemikalie (WEC) zugesetzt wird.

4. Verfahren nach Anspruch 3, dadurch gekennzeichnet, dass als wasserenthärtende Chemikalie (WEC) Na₂C0₃ verwendet wird.

5. Verfahren nach Anspruch 4, dadurch gekennzeichnet, dass die eingesetzte Menge an Na₂C0₃ bezogen auf das eingetragene Papier 4 Gew.-% nicht übersteigt.

6. Verfahren nach einem der Ansprüche 1 bis 5, dadurch gekennzeichnet, dass das Wasser des im zweiten Teilprozess verwendeten zweiten Prozesswasser-Teilstroms (PW2) in seiner Wasserhärte (WH) durch Zugabe einer wasserhärtenden Chemikalie (WHC), vorzugsweise von CaC1₂, zusätzlich erhöht wird.

7. Verfahren nach einem der Ansprüche 1 bis 6, dadurch gekennzeichnet, dass in einem Zwischenschritt zwischen dem ersten und zweiten Teilprozess der Suspension durch Eindicken Prozesswasser in Form eines Filtrats (AW) entzogen wird, und das beim Zwischenschritt durch Eindicken erhaltene Filtrat (AW) dem ersten Prozesswasser-Teilstrom (PW1) wieder zugeführt wird.

8. Verfahren nach Anspruch 7, dadurch gekennzeichnet, dass das Filtrat (AW) einer Aufbereitung unterzogen wird, bevor es dem ersten Prozesswasser-Teilstrom (PW1) wieder zugeführt wird, und die Aufbereitung eine selektive Flotation umfasst, welche unter Vermeidung von Flotationschemikalien ausschliesslich mittels Injektion eines sauerstoffhaltigen Gases durchgeführt wird.
